(19) Europäisches Patentamt
European Patent Office
Office européen des brevets

(11) **EP 4 589 205 A1**

(12) **EUROPEAN PATENT APPLICATION**
published in accordance with Art. 153(4) EPC

(43) Date of publication:
**23.07.2025 Bulletin 2025/30**

(21) Application number: **23878767.5**

(22) Date of filing: **01.08.2023**

(51) International Patent Classification (IPC):
**F24F 11/30** (2018.01)   **F24F 11/64** (2018.01)
**F24F 11/84** (2018.01)   **F24F 11/86** (2018.01)
**F24F 11/88** (2018.01)   **F25B 31/00** (2006.01)
**F25B 49/02** (2006.01)

(52) Cooperative Patent Classification (CPC):
**F24F 11/84; F24F 11/86; F24F 11/88; F25B 31/00;**
**F25B 49/02;** F24F 2110/30; F24F 2110/64;
Y02B 30/70

(86) International application number:
**PCT/CN2023/110549**

(87) International publication number:
**WO 2024/082771 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022 CN 202211274297**

(71) Applicant: **Gree Electric Appliances, Inc. of
Zhuhai
Zhuhai, Guangdong 519031 (CN)**

(72) Inventors:
• **YU, Kai**
**Zhuhai, Guangdong 519031 (CN)**
• **FU, Yingsheng**
**Zhuhai, Guangdong 519031 (CN)**
• **ZHANG, Hui**
**Zhuhai, Guangdong 519031 (CN)**
• **XUE, Handong**
**Zhuhai, Guangdong 519031 (CN)**
• **NI, Yi**
**Zhuhai, Guangdong 519031 (CN)**
• **YANG, Li**
**Zhuhai, Guangdong 519031 (CN)**

(74) Representative: **Reddie & Grose LLP
The White Chapel Building
10 Whitechapel High Street
London E1 8QS (GB)**

(54) **OIL RETURN CONTROL METHOD AND APPARATUS FOR VARIABLE REFRIGERANT FLOW (VRF), AND ELECTRONIC DEVICE AND VRF SYSTEM**

(57)    An oil return control method and apparatus for variable refrigerant flow (VRF), and a VRF system. The oil return control method for VRF comprises: when a VRF system needs to enter an oil return operation, dividing, according to an operating state of each I indoor unit, indoor units into a first indoor unit and a second indoor unit, wherein the oil return operation comprises a plurality of oil C return stages; and using different control strategies at each oil return stage, so as to control the frequency of a compressor of the VRF Lq system and control the opening degree of an indoor unit valve of at least one of the first indoor unit and the second indoor unit.

classify an indoor unit as a first indoor unit or a
second indoor unit according to an operating state
of the indoor unit in a case where a multi-split
system needs to enter an oil return process,
wherein the oil return process comprises a
plurality of oil return stages    S201

employ a different control policy in each oil
return stage to control a frequency of a compressor
of the multi-split system and to control an indoor
unit valve opening of at least one of the first
indoor unit or the second indoor unit    S202

Fig. 2

## Description

### CROSS-REFERENCE TO RELATED APPLICATIONS

The present disclosure is based on and claims priority of Chinese application for invention No. 202211274297.1, filed on October 18, 2022, the disclosure of hereby incorporated into this disclosure by reference in its entirety.

### TECHNICAL FIELD

The present disclosure relates to the technical field of multi-split systems, particularly to a multi-split oil return control method, a multi-split oil return control apparatus, an electronic device and a multi-split system.

### BACKGROUND

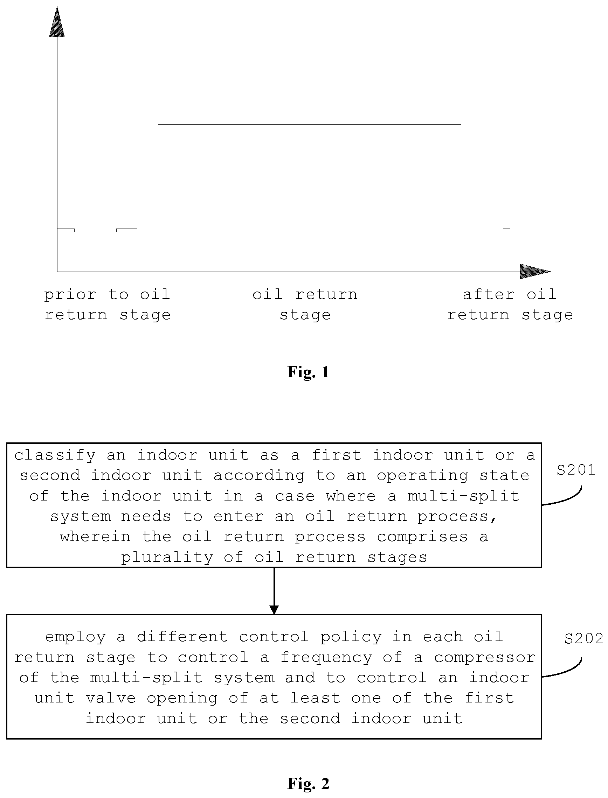

All multi-split systems operating in a cooling mode employ a single-stage oil return control method. FIG. 1 shows a schematic diagram of the oil return stage in the related technology, where the horizontal axis represents the timing of the oil return stage and the vertical axis represents the compressor frequency. After entering the oil return process, the electronic expansion valves of all indoor units are controlled to open at a certain frequency (regardless of whether the indoor units are desired to be activated or deactivated) and to continue for a certain period of time until the oil return is completed. This oil return control scheme does not take into account the significant noise hazard in the oil return process of indoor units without capacity demand.

To suppress noise during operation, various manufacturers have taken some measures, such as dividing the indoor units of a system into different classes (with silent requirement and without silent requirement), and returning oil for indoor units without silent requirement under certain conditions to avoid the problem of oil return noise for indoor units with silent requirement. However, the above solution cannot guarantee the oil return effect of the indoor units, which requires a low noise level.

### SUMMARY

Embodiments of the present application provide a multi-split oil return control method, a multi-split oil return control apparatus, and multi-split system capable of guaranteeing the oil return effect of the oil return process of the indoor units and reducing fluid flow noise.

To solve the above technical problems, the present disclosure provides a multi-split oil return control method, comprising: classifying an indoor unit as a first indoor unit or a second indoor unit according to an operating state of the indoor unit in a case where a multi-split system needs to enter an oil return process, wherein the oil return process comprises a plurality of oil return stages; and employing a different control policy in each oil return stage to control a frequency of a compressor of the multi-split system and to control an indoor unit valve opening of at least one of the first indoor unit or the second indoor unit.

In some embodiments, the classifying the indoor unit as the first indoor unit or the second indoor unit according to the operating state of the indoor unit comprises: determining whether the operating state of the indoor unit is in an activated state and has not reached a preset shutdown temperature value; classifying the indoor unit as the first indoor unit with a capacity demand in a case where the indoor unit is in the activated state and has not reached the preset shutdown temperature value; and classifying the indoor unit as the second indoor unit without the capacity demand in a case where the indoor unit is not in the activated state or the preset shutdown temperature value has not been reached.

In some embodiments, the employing the different control policy in the each oil return stage to control the frequency of the compressor of the multi-split system comprises: controlling the compressor to operate at a preset frequency corresponding to the each oil return stage in the each oil return stage, wherein a preset frequency corresponding to a subsequent oil return stage is smaller than a preset frequency corresponding to a preceding oil return stage.

In some embodiments, the employing the different control policy in the each oil return stage to control the frequency of the compressor of the multi-split system comprises: calculating a preset frequency according to a formula corresponding to the each oil return stage in the each oil return stage; and controlling the compressor to operate at the preset frequency corresponding to the each oil return stage.

In some embodiments, the oil return process comprises a first oil return stage and a second oil return stage, the calculating the preset frequency according to the formula corresponding to the each oil return stage in the each oil return stage comprises: calculating a preset frequency $F_I$ according to a following formula in the first oil return stage:

$$F_I = Q_I * k/2 + Y1$$

where $Q_I = \Sigma$(a rated capacity of an activated indoor unit)$^*A_c +\Sigma$(a rated capacity of a deactivated indoor unit)$^*\gamma$; and calculating a preset frequency $F_{II}$ according to a following formula in the second oil return stage:

$$F_{II} = Q_{II} * k/2 + Y2$$

where $Q_{II} = \Sigma$(the rated capacity of the activated indoor unit) $^*A_c$,

$$A_c = (\{[(T_{i-env} - T1) \times A1 + A2] + A3 \times (T_{o-env} - T2)\})/A4$$

where, $Q_I$ and $Q_{II}$ are capacity demands, k is a compressor displacement coefficient, $\gamma$ is a compensation correction coefficient for a deactivated indoor unit, Y1 is a first compensation coefficient, Y2 is a second compensation coefficient, $T_{i-env}$ is an indoor ambient temperature, $T_{o-env}$ is an outdoor ambient temperature, $T1$ and $T2$ are preset temperature values, and $A1$, $A2$, $A3$, and $A4$ are all preset values; $F_I \geq H1$, $F_{II} \geq H2$, H1 is a minimum operating frequency of the compressor in the first oil return stage, and H2 is a minimum operating frequency of the compressor in the second oil return stage.

In some embodiments, the employing the different control policy in the each oil return stage to control an indoor unit valve opening of the first indoor unit comprises: acquiring an indoor unit superheat of the first indoor unit in real time in the each oil return stage of the oil return process; and determining an indoor unit valve opening according to the indoor unit superheat, thereby adjusting an indoor unit valve of the first indoor unit in real time according to the indoor unit valve opening; or, determining a preset indoor unit valve opening corresponding to the each oil return stage in the each oil return stage of the oil return process; and adjusting an indoor unit valve of the second indoor unit according to the preset indoor unit valve opening.

The present disclosure further provides a multi-split oil return control apparatus, comprising: a setting module, configured to classify an indoor unit as a first indoor unit or a second indoor unit according to an operating state of the indoor unit in a case where a multi-split system needs to enter an oil return process, wherein the oil return process comprises a plurality of oil return stages; and a control module, configured to employ a different control policy in each oil return stage to control a frequency of a compressor of the multi-split system and to control an indoor unit valve opening of at least one of the first indoor unit or the second indoor unit.

The present disclosure also provides a multi-split system, wherein the multi-split system comprises the multi-split oil return control apparatus described above.

The present disclosure also provides a computer-readable storage medium on which a computer program is stored, wherein the program, when executed by a processor, implements the method described above.

The present disclosure also provides an electronic device, comprising: one or more processors; a storage device for storing one or more programs that, when executed by the one or more processors, enable the one or more processors to implement the method described above.

The present disclosure also provides a computer program for causing a processor to perform any of the methods described above.

By applying the technical solution of the present disclosure, the entire oil return process is divided into multiple oil return stages, and in each oil return stage, the indoor units with capacity demand and the indoor units without capacity demand are respectively controlled, thereby performing noise control of the oil return process while ensuring the oil return effect, thus reducing the liquid flow noise of the refrigerant during the entire oil return process.

**BRIEF DESCRIPTION OF THE DRAWINGS**

The accompanying drawings, which are included to provide a further understanding of this disclosure and are incorporated in and constitute a part of this disclosure, illustrate embodiments of this disclosure, and together with the illustrative embodiments of the present disclosure serve to explain the present disclosure, but are not limitation thereof.

FIG. 1 is a schematic diagram showing an oil return stage in the related technology;
FIG. 2 is a flowchart of a multi-split oil return control method according to one embodiment of the present disclosure;
FIG. 3 is a schematic diagram showing some oil return stages according to one embodiment of the present disclosure;
FIG. 4 is a schematic diagram showing the valve opening of the indoor unit in the related technology;
FIG. 5 is a schematic diagram showing the valve opening of the indoor unit according to one embodiment of the present disclosure;
FIG. 6 is a flowchart of a multi-split oil return control method according to one embodiment of the present disclosure;
FIG. 7 is a structural block diagram of a multi-split oil return control apparatus according to one embodiment of the present disclosure.

## DETAILED DESCRIPTION

In order to make objectives, technical schemes and advantages of the present disclosure more clear, the present disclosure will be further described in detail with reference to the accompanying drawings. Obviously, merely some embodiments of this disclosure, rather than all embodiments thereof, are given herein. All other embodiments obtained by those of ordinary skill in the art based on the embodiments of the present disclosure without creative efforts shall fall within the protection scope of the present disclosure.

The terms used in the embodiments of the present disclosure are only for the purpose of describing specific examples, but are not intended to limit the present disclosure. The singular forms of "a", "said" and "the" as used in the present disclosure and in the appended claims are also intended to include the plural forms, unless the context clearly dictates otherwise. The expression "multiple" generally includes at least two.

It should be understood that the term "and/or" as used herein is simply a description of the association of related objects, indicating that there may be three possible relationships of the related objects, for example, A and/or B can indicate the presence of A alone, the presence of both A and B, and the presence of B alone. In addition, the character "/" in this description generally indicates that the objects associated before and after "/" have an "or" relationship.

Depending on the context, the word "if" as used herein can be interpreted as "when" or "in response to determination" or "in response to detection". Similarly, depending on the context, the phrase "if it is determined" or "if (stated condition or event) is detected" can be interpreted as "when it is determined" or "in response to determination" or "when (stated condition or event) is detected" or "in response to detection of (stated condition or event)".

Further, terms "include", "comprise" or their any other variations are intended to encompass non-exclusive composition, so that a product or device comprising a series of factors may comprise not only these factors, but also other factors that are not listed explicitly, or factors intrinsic to this product or device. Without limitation, a factor defined by wording "comprise one..." does not exclude the existence of other same factors in a product or device comprising such factor.

Below, some embodiments of the present disclosure will be described in detail with reference to the accompanying drawings.

FIG. 2 is a flowchart of a multi-split oil return control method according to one embodiment of the present disclosure. As shown in FIG. 2, the method comprises the following steps.

In step S201, an indoor unit is classified as a first indoor unit or a second indoor unit according to an operating state of the indoor unit in a case where a multi-split system needs to enter an oil return process, wherein the oil return process comprises a plurality of oil return stages.

In step S202, a different control policy is employed in each oil return stage to control a frequency of a compressor of the multi-split system and to control an indoor unit valve opening of at least one of the first indoor unit or the second indoor unit. The valves described above are electronic expansion valves .

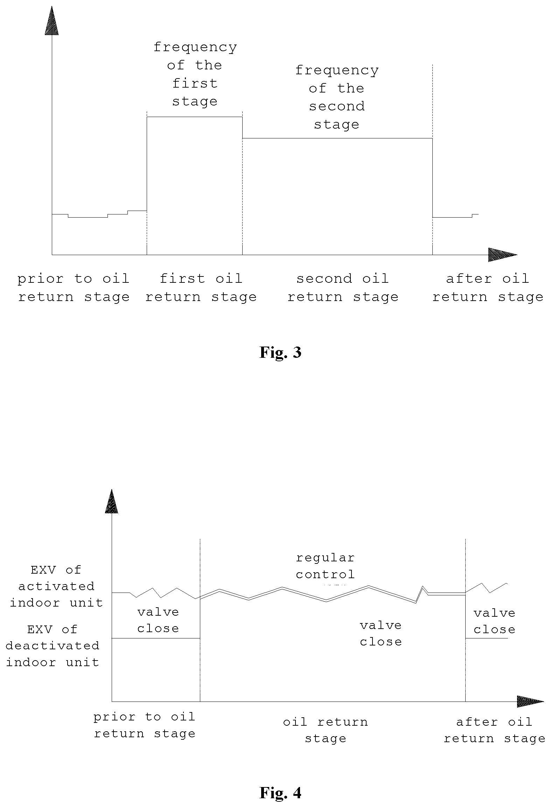

In this embodiment, the entire oil return process is divided into the plurality of oil return stages. FIG. 3 is a schematic diagram showing the oil return stages. The horizontal axis represents the timing of the oil return stages, and the vertical axis represents the compressor frequency. The compressor frequency varies in different oil return stages. In this embodiment, the indoor unit with capacity demand and the indoor unit without capacity demand are respectively controlled, thereby performing noise control of the oil return process while ensuring the oil return effect, thus reducing the liquid flow noise of the refrigerant during the entire oil return process.

It should be noted that in some embodiments, in a case where the entire oil return process is divided into the plurality of the oil return stages, the duration of the each oil return stage is preset, such as a manufacturer's preset duration value. In some embodiments, the duration of each oil return stage is determined based on a maximum length of a piping allowed to be paired with a unit. In some embodiments, in a case where the entire oil return process is divided into two oil return stages, the time ratio between a first oil return stage and a second oil return stage can be set between 1:1 and 1:4.

In related technologies, after entering the oil return process, the multi-split system controls the EXVs of all indoor units to open at a certain frequency (regardless of whether the indoor unit are desired to be activated or deactivated) and to continue for a certain period of time until the oil return is completed. The above oil return process does not take into account the significant noise hazard in the oil return process of indoor unit without capacity demand. In this regard, the present disclosure divides the indoor units into those with capacity demand and those without capacity demand. Specifically, in some embodiments, it is determined whether the operating state of the indoor unit is in a activated state and has not reached a preset shutdown temperature value. If so, the indoor unit is classified as a first indoor unit with capacity demand; otherwise, the indoor unit is classified as a second indoor unit without capacity demand. Thus, it is possible to control the indoor unit with capacity demand and the indoor unit without capacity demand to avoid significant noise during oil return for the indoor unit without capacity demand.

In each oil return stage, the a frequency of the compressor of the multi-split system is adjusted. Furthermore, this embodiment adopts different control policys for valve (EXV) opening control of the first indoor unit with capacity demand and the second indoor unit without capacity demand.

FIG. 4 is a schematic diagram showing the valve opening of the indoor unit in the related technology, where the horizontal axis represents the timing of the oil return stage and the vertical axis represents the valve opening of the indoor unit. In the related technology, the same routine operation for valve opening control is performed throughout the entire oil return process, regardless of whether the indoor unit are desired to be activated or deactivated.

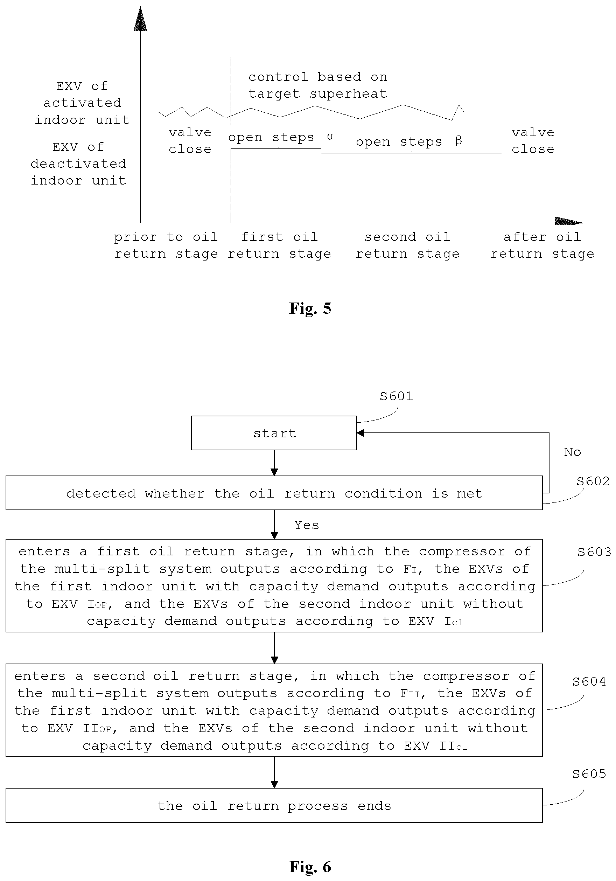

The valve opening control of the indoor unit in this embodiment is achieved by at least one of the follow embodiments: an indoor unit superheat of the first indoor unit is acquired in real time in the each oil return stage of the oil return process, and an indoor unit valve opening is determined according to the indoor unit superheat, thereby adjusting an indoor unit valve of the first indoor unit in real time according to the indoor unit valve opening, or, a preset indoor unit valve opening corresponding to the each oil return stage is determined in the each oil return stage of the oil return process, and an indoor unit valve of the second indoor unit is adjusted according to the preset indoor unit valve opening. FIG. 5 is a schematic diagram showing the valve opening of the indoor unit, where the horizontal axis represents the timing of the oil return stages and the vertical axis represents the valve opening of the indoor unit. In different oil return stages, different valve opening control policys are employed for first indoor unit with capacity demand and second indoor unit without capacity demand. In a specific implementation of this embodiment, the indoor unit superheat of the first indoor unit and the indoor unit superheat of the second indoor unit are controlled simultaneously as needed. In some embodiments, the indoor unit superheat of the first indoor unit and the indoor unit superheat of the second indoor unit are controlled separately.

In some embodiments, the frequency of the compressor of the multi-split system is controlled by the following embodiments: the compressor is controlled to operate at a preset frequency corresponding to the each oil return stage in the each oil return stage, wherein a preset frequency corresponding to a subsequent oil return stage is smaller than a preset frequency corresponding to a preceding oil return stage.

It should be noted that in some embodiments, the valve opening required by the second indoor unit without capacity demand in a preceding oil return stage is greater than that required in a subsequent oil return stage. For the second indoor unit without capacity demand, a larger valve opening is required in the preceding oil return stage to return oil for the second indoor unit, while in the subsequent oil return stage, a smaller valve opening is required or the valve can be closed because the oil has been returned in the preceding stage. Correspondingly, more compressor output is required in the preceding oil return stage in order to ensure normal pressure and a required flow rate for the oil return. Therefore, the preset frequency corresponding to the preceding oil return stage needs to be greater than the preset frequency corresponding to the subsequent oil return stage.

The frequency of the compressor of the multi-split system control is controlled by the following embodiments: a preset frequency is calculated according to a formula corresponding to the each oil return stage in the each oil return stage, and the compressor is controlled to operate at the preset frequency corresponding to the each oil return stage.

Specifically, in a case where the oil return process includes a first oil return stage and a second oil return stage, a preset frequency $F_I$ is calculated according to the following formula in the first oil return stage:

$$F_I = Q_I * k/2 + Y1$$

where $Q_I = \Sigma$(a rated capacity of an activated indoor unit) *$A_c$ +$\Sigma$(a rated capacity of a deactivated indoor unit)*$\gamma$.

in the second oil return stage, a preset frequency $F_{II}$ is calculated according to the following formula:

$$F_{II} = Q_{II} * k/2 + Y2$$

where $Q_{II} = \Sigma$(the rated capacity of the activated indoor unit)*$A_c$,

$$A_c = (\{[(T_{i-env} - T1) \times A1 + A2] + A3 \times (T_{o-env} - T2)\})/A4$$

where, $Q_I$ and $Q_{II}$ are capacity demands (in a unit of 100W), k is a compressor displacement coefficient, $\gamma$ is a compensation correction coefficient for a deactivated indoor unit (for example, with a value of 0.1~0.5), Y1 is a first compensation coefficient (for example, with a value from -10 to 10), Y2 is a second compensation coefficient (for example, with a value from -10 to 10), and Y1 and Y2 can be the same or different, $T_{i-env}$ is an indoor ambient temperature, $T_{o-env}$ is an outdoor ambient temperature, $T1$ (e.g. a temperature value of 27) and $T2$ (e.g. a temperature value of 35) are preset temperature values, and $A1$ (e.g. with a value from 1.0 to 4.0), $A2$ (e.g. with a value from 50 to 200), $A3$ (e.g. with a value from 0.5 to 1.5), and $A4$ (e.g. with a value from 50 to 200) are all preset values; $F_I \geq H1$, $F_{II} \geq H2$, H1 is a minimum operating frequency of the compressor in the first oil return stage (e.g. 60Hz), and H2 is a minimum operating frequency of the compressor in the second oil return stage (e.g. 45Hz). It should be noted that in the above formula for calculating the preset frequency $F_I$ of the first oil return stage, a numerical calculation relationship is established between the two sides of the formula, that is, after calculating the specific value on the right side of the formula, a frequency unit (such as Hz) is added for the preset frequency $F_I$. Similarly, in the above formula for calculating the preset frequency $F_{II}$ of the second oil return stage, a numerical calculation relationship is established between the two sides of the formula, that is, after calculating the specific value on the right side of the formula, a frequency unit (such as Hz) is added for the preset frequency $F_{II}$.

Accordingly, it is possible to calculate an appropriate compressor frequency value for each oil return stage according to the formulas, thereby achieving compressor control for indoor unit with capacity demand and indoor unit without capacity demand.

In some embodiments, the entire oil return process is divided into multiple oil return stages, such as a first oil return stage and a second oil return stage. In some embodiments, the first oil return stage is further subdivided into multiple oil return stages, and the second oil return stage is further subdivided into multiple oil return stages. In some embodiments, a specific arrangement can be made based on the application scenarios and operational requirements of the multi-split system. This embodiment will be described with an example in which the entire oil return process includes a first oil return stage and a second oil return stage.

FIG. 6 is a flowchart of a multi-split oil return control method according to some embodiments of the present disclosure. As shown in FIG. 6, the method includes the following steps.

In step S601, the process starts.

At the beginning of the process, it is necessary to determine the capacity demand of the indoor unit: an indoor unit that are in a activated state before the unit entering the return oil process and has not reach a preset temperature value are classified as the indoor unit with capacity demand, otherwise it is classified as the indoor unit without capacity demand (including shut-down indoor unit).

In step S602, it is detected whether the multi-split system meets an oil return condition. If so, the method proceeds to step S603; otherwise, the method proceeds to step S601. The oil return condition is a conventional criterion for determining whether oil return is currently required.

In step S603, the multi-split system enters a first oil return stage, in which its compressor outputs according to $F_I$, the EXVs of the first indoor unit with capacity demand outputs according to **EXV I$_{op}$,** and the EXVs of the second indoor unit without capacity demand outputs according to **EXV I$_{cl}$.**

In step S604, the multi-split system enters a second oil return stage, in which its compressor outputs according to $F_{II}$, the EXVs of the first indoor unit with capacity demand outputs according to **EXV II$_{op}$,** and the EXVs of the second indoor unit without capacity demand outputs according to **EXV II$_{cl}$.**

In step S605, the oil return process ends.

This embodiment introduces compressor frequency control for the each oil return stage: in a case where the multi-split system enters the first oil return stage, the compressor outputs according to the frequency $F_I$; in a case where the multi-split system enters the second oil return stage, the compressor outputs according to the frequency $F_{II}$. In some embodiments, $F_I$ and $F_{II}$ are preset values. In some embodiments, $F_I$ and $F_{II}$ are calculated according to the following method:

$$F_I = Q_I * k/2 + Y1$$

where $Q_I = \Sigma$(a rated capacity of an activated indoor unit) *$A_c$ +$\Sigma$(a rated capacity of a deactivated indoor unit)*$\gamma$.

In the second oil return stage, a preset frequency $F_{II}$ is calculated according to the following formula:

$$F_{II} = Q_{II} * k/2 + Y2$$

where $Q_{II} = \Sigma$(the rated capacity of the activated indoor unit) *$A_c$,

$$A_c = (\{[(T_{i-env} - T1) \times A1 + A2] + A3 \times (T_{o-env} - T2)\})/A4$$

where, $Q_I$ and $Q_{II}$ are capacity demands (in a unit of 100W), k is a compressor displacement coefficient, $\gamma$ is a compensation correction coefficient for a deactivated indoor unit (for example, with a value of 0.1~0.5), Y1 is a first compensation coefficient (for example, with a value from -10 to 10), Y2 is a second compensation coefficient (for example, with a value from -10 to 10), and Y1 and Y2 can be the same or different, $T_{i-env}$ is an indoor ambient temperature, $T_{o-env}$ is an outdoor ambient temperature, $T1$ (e.g. a temperature value of 27) and $T2$ (e.g. a temperature value of 35) are preset temperature values, and $A1$ (e.g. with a value from 1.0 to 4.0), $A2$ (e.g. with a value from 50 to 200), $A3$ (e.g. with a value from 0.5 to 1.5), and $A4$ (e.g. with a value from 50 to 200) are all preset values; $F_I \geq H1$, $F_{II} \geq H2$, H1 is a minimum operating frequency of the compressor in the first oil return stage (e.g. 60Hz), and H2 is a minimum operating frequency of the compressor in the second oil return stage (e.g. 45Hz).

This embodiment also introduces valve opening control for the first indoor unit and the second indoor unit in each oil return stage.

In a case where the multi-split system enters the first oil return stage, the EXVs of the first indoor unit with capacity demand output according to **EXV I$_{op}$;** the EXVs of the second indoor unit without capacity demand output according to **EXV I$_{cl}$.** In a case where the multi-split system enters the second oil return stage, the EXVs of the first indoor unit with capacity demand output according to **EXV II$_{op}$,** and the EXVs of the second indoor unit without capacity demand output according to **EXV II$_{cl}$.**

In some embodiments, **EXV I$_{op}$** and **EXV II$_{op}$** are controlled according to the indoor unit superheat (refrigerant outlet temperature before evaporation - the refrigerant outlet temperature after evaporation), which is a conventional means. Compared with the operation without oil return, the indoor unit superheat is appropriately reduced, and a suitable amount of liquid-phase refrigerant is retained during the evaporation process, which is beneficial for removing the lubricating oil inside the indoor unit with capacity demand.

In some embodiments, **EXV I$_{cl}$** and **EXV II$_{cl}$** are operated according to the preset openings, where the **EXV I$_{cl}$** is operated according to $\alpha$ and the **EXV II$_{cl}$** is operated according to $\beta$, $\beta < \alpha$.

This embodiment divides the entire oil return process into multiple oil return stages, the indoor unit with capacity demand and the indoor unit without capacity demand are respectively controlled, thereby performing noise control of the oil return process while ensuring the oil return effect, thus reducing the liquid flow noise of the refrigerant during the entire oil return process.

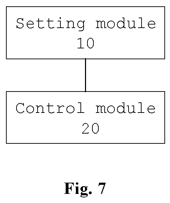

Corresponding to the multi-split oil return control method described in the above embodiment, this embodiment provides a multi-split oil return control apparatus. FIG. 7 is a structural block diagram of a multi-split oil return control apparatus according to one embodiment of the present disclosure. As shown in FIG. 7, the apparatus comprises:

a setting module 10 is configured to classify an indoor unit as a first indoor unit or a second indoor unit according to an operating state of the indoor unit in a case where a multi-split system needs to enter an oil return process, wherein the oil return process comprises a plurality of oil return stages.

a control module 20 connected to the setting module 10, and is configured to employ a different control policy in each oil return stage to control a frequency of a compressor of the multi-split system and to control an indoor unit valve opening of at least one of the first indoor unit or the second indoor unit.

The present disclosure also provides a multi-split system comprising the multi-split oil return control apparatus described above.

This embodiment divides the entire oil return process into multiple oil return stages, the indoor unit with capacity demand and the indoor unit without capacity demand are respectively controlled. The specific technical means of implementation have been introduced in detail above, and will not be repeated here. Based on this embodiment, noise control can be performed in the oil return process while ensuring the oil return effect, and thereby reducing the liquid flow noise of the refrigerant during the entire oil return process.

An embodiment of the present disclosure provides software used to implement the technical solutions described in the above embodiments.

An embodiment of the present disclosure provides a nonvolatile computer storage medium having stored thereon computer executable instructions that are used to implement the multi-split oil return method provided in any of the method embodiments described above.

The storage medium stores the foregoing software, and includes but is not limited to CD, floppy, hard disk, rewritable memory, etc.

The above product can perform the method provided by any embodiment of the present disclosure, and has corresponding functional modules to perform the method and achieve the beneficial effects of the present disclosure. For technical details not described in detail in this embodiment, reference can be made to the method provided in the embodiment of the present disclosure.

The apparatus embodiments described above are only schematic, wherein the unit described as separate components may or may not be physically separated, and the component illustrated as a unit may or may not be a physical unit, may be located in one place, or may be distributed on multiple network units. Some or all of the modules may be selected according to actual needs to implement the solution of this embodiment.

Through the description of the above embodiments, those skilled in the art may clearly understand that each embodiment can be implemented by means of software and a necessary general hardware platform, or by hardware. Based on this understanding, the above technical solution essentially or in other word, a portion thereof that contributes to the related technology or all or part of the technical solution can be embodied in the form of a software product, which is stored in a storage medium, such as a ROM/RAM, a magnetic disk, and an optical disk, comprising instructions to cause a computer device (which may be a personal computer, a server, or a network device, etc.) to perform all or part of the steps of the method described in the various embodiments of the present disclosure.

It shall be noted that: the above embodiments are merely illustration of the technical solution of this disclosure, but are not limitation thereof. Although this disclosure has been described in detail with reference to the above embodiments, those ordinary skilled in the art shall understand: the technical solutions recited in the various embodiments described above may be modified or some technical features thereof may be substituted equivalently, such modifications or substitutions do not deviate the nature of the corresponding technical solutions from the spirit and scope of the technical solutions embodied in the embodiments of this disclosure.

**Claims**

1. A multi-split oil return control method, comprising:

   classifying an indoor unit as a first indoor unit or a second indoor unit according to an operating state of the indoor unit in a case where a multi-split system needs to enter an oil return process, wherein the oil return process comprises a plurality of oil return stages; and
   employing a different control policy in each oil return stage to control a frequency of a compressor of the multi-split system and to control an indoor unit valve opening of at least one of the first indoor unit or the second indoor unit.

2. The multi-split oil return control method according to claim 1, wherein the classifying the indoor unit as the first indoor unit or the second indoor unit according to the operating state of the indoor unit comprises:

   determining whether the operating state of the indoor unit is in an activated state and has not reached a preset shutdown temperature value;
   classifying the indoor unit as the first indoor unit with a capacity demand in a case where the indoor unit is in the activated state and has not reached the preset shutdown temperature value; and
   classifying the indoor unit as the second indoor unit without the capacity demand in a case where the indoor unit is not in the activated state or the preset shutdown temperature value has not been reached.

3. The multi-split oil return control method according to claim 1, wherein the employing the different control policy in the each oil return stage to control the frequency of the compressor of the multi-split system comprises:
   controlling the compressor to operate at a preset frequency corresponding to the each oil return stage in the each oil return stage, wherein a preset frequency corresponding to a subsequent oil return stage is smaller than a preset frequency corresponding to a preceding oil return stage.

4. The multi-split oil return control method according to claim 1, wherein the employing the different control policy in the each oil return stage to control the frequency of the compressor of the multi-split system comprises:

   determining a preset frequency for a first oil return stage according to a rated power of an activated indoor unit, a rated power of a deactivated indoor unit, an indoor ambient temperature and an outdoor ambient temperature;
   determining a preset frequency for a second oil return stage according to a rated capacity of the activated indoor unit, the indoor ambient temperature and the outdoor ambient temperature; and
   controlling the compressor to operate at the preset frequency for the first oil return stage in the first oil return stage and the preset frequency for the second oil return stage in the second oil return stage.

5. The multi-split oil return control method according to claim 1, wherein the employing the different control policy in the each oil return stage to control the frequency of the compressor of the multi-split system comprises:

   calculating a preset frequency according to a formula corresponding to the each oil return stage in the each oil return stage; and
   controlling the compressor to operate at the preset frequency corresponding to the each oil return stage.

6. The multi-split oil return control method according to claim 5, wherein the oil return process comprises a first oil return stage and a second oil return stage,
   the calculating the preset frequency according to the formula corresponding to the each oil return stage in the each oil return stage comprises:

   calculating a preset frequency $F_I$ according to a following formula in the first oil return stage:

$$F_I = Q_I * k/2 + Y1$$

where $Q_I$ = Σ(a rated capacity of an activated indoor unit)*$A_c$ +Σ(a rated capacity of a deactivated indoor unit)*$\gamma$; calculating a preset frequency $F_{II}$ according to a following formula in the second oil return stage:

$$F_{II} = Q_{II} * k/2 + Y2$$

where $Q_{II}$ = Σ(the rated capacity of the activated indoor unit) *$A_c$,

$$A_c = (\{[(T_{i-env} - T1) \times A1 + A2] + A3 \times (T_{o-env} - T2)\})/A4$$

where, $Q_I$ and $Q_{II}$ are capacity demands, k is a compressor displacement coefficient, $\gamma$ is a compensation correction coefficient for a deactivated indoor unit, Y1 is a first compensation coefficient, Y2 is a second compensation coefficient, $T_{i-env}$ is an indoor ambient temperature, $T_{o-env}$ is an outdoor ambient temperature, $T1$ and $T2$ are preset temperature values, and $A1$, $A2$, $A3$, and $A4$ are all preset values; $F_I \geq H1$, $F_{II} \geq H2$, H1 is a minimum operating frequency of the compressor in the first oil return stage, and H2 is a minimum operating frequency of the compressor in the second oil return stage.

7. The multi-split oil return control method according to claim 1, wherein the employing the different control policy in the each oil return stage to control an indoor unit valve opening of the first indoor unit comprises:

acquiring an indoor unit superheat of the first indoor unit in real time in the each oil return stage of the oil return process; and
determining an indoor unit valve opening according to the indoor unit superheat, thereby adjusting an indoor unit valve of the first indoor unit in real time according to the indoor unit valve opening.

8. The multi-split oil return control method according to claim 1 or 7, wherein the employing the different control policy in the each oil return stage to control an indoor unit valve opening of the second indoor unit comprises:

determining a preset indoor unit valve opening corresponding to the each oil return stage in the each oil return stage of the oil return process; and
adjusting an indoor unit valve of the second indoor unit according to the preset indoor unit valve opening.

9. The multi-split oil return control method according to claim 8, wherein
the oil return process comprises two oil return stages, a preset indoor unit valve opening of the second indoor unit in a subsequent oil return stage is less than a preset indoor unit valve opening of the second indoor unit in a preceding oil return stage.

10. The multi-split oil return control method according to claim 1, wherein
a duration of the each oil return stage is preset or is determined based on a maximum length of a piping allowed to be paired with a unit.

11. A multi-split oil return control apparatus, comprising:

a setting module, configured to classify an indoor unit as a first indoor unit or a second indoor unit according to an operating state of the indoor unit in a case where a multi-split system needs to enter an oil return process, wherein the oil return process comprises a plurality of oil return stages; and
a control module, configured to employ a different control policy in each oil return stage to control a frequency of a compressor of the multi-split system and to control an indoor unit valve opening of at least one of the first indoor unit or the second indoor unit.

12. An electronic device, comprising:

one or more processors;
a storage device for storing one or more programs that, when executed by the one or more processors, enable the one or more processors to implement the method according to any one of claims 1 to 10.

13. A multi-split system, comprising the multi-split oil return control apparatus according to claim 7 or the electronic device according to claim 12.

14. A computer readable storage medium stored thereon computer instructions that, when executed by a processor, implement the method according to any one of claims 1 to 10.

15. A computer program for causing a processor to perform the method according to any one of claims 1 to 10.

prior to oil        oil return        after oil
return stage         stage        return stage

**Fig. 1**

```
classify an indoor unit as a first indoor unit or a
second indoor unit according to an operating state
 of the indoor unit in a case where a multi-split
    system needs to enter an oil return process,
     wherein the oil return process comprises a
            plurality of oil return stages
```
S201

```
    employ a different control policy in each oil
return stage to control a frequency of a compressor
of the multi-split system and to control an indoor
  unit valve opening of at least one of the first
         indoor unit or the second indoor unit
```
S202

**Fig. 2**

frequency
of the
first
stage

frequency
of the
second
stage

prior to oil
return stage

first oil
return stage

second oil
return stage

after oil
return stage

**Fig. 3**

EXV of
activated
indoor unit

EXV of
deactivated
indoor unit

regular
control

valve
close

valve
close

valve
close

prior to oil
return stage

oil return
stage

after oil
return stage

**Fig. 4**

control based on
target superheat

EXV of
activated
indoor unit

valve
close    open steps α    open steps β    valve
close

EXV of
deactivated
indoor unit

prior to oil    first oil    second oil    after oil
return stage    return stage    return stage    return stage

**Fig. 5**

start    S601

No

detected whether the oil return condition is met    S602

Yes

enters a first oil return stage, in which the compressor of
the multi-split system outputs according to $F_I$, the EXVs of
the first indoor unit with capacity demand outputs according
to EXV $I_{OP}$, and the EXVs of the second indoor unit without
capacity demand outputs according to EXV $I_{cl}$    S603

enters a second oil return stage, in which the compressor of
the multi-split system outputs according to $F_{II}$, the EXVs of
the first indoor unit with capacity demand outputs according
to EXV $II_{OP}$, and the EXVs of the second indoor unit without
capacity demand outputs according to EXV $II_{cl}$    S604

S605

the oil return process ends

**Fig. 6**

```
┌─────────────────────┐
│   Setting module    │
│        10           │
└─────────────────────┘
           │
           │
┌─────────────────────┐
│   Control module    │
│        20           │
└─────────────────────┘
```

**Fig. 7**

## INTERNATIONAL SEARCH REPORT

| | International application No. |
|---|---|
| | **PCT/CN2023/110549** |

**A.      CLASSIFICATION OF SUBJECT MATTER**

F24F11/30(2018.01)i;  F24F11/64(2018.01)i;  F24F11/84(2018.01)i;  F24F11/86(2018.01)i;  F24F11/88(2018.01)i;  F25B31/00(2006.01)i;  F25B49/02(2006.01)i

According to International Patent Classification (IPC) or to both national classification and IPC

**B.      FIELDS SEARCHED**

Minimum documentation searched (classification system followed by classification symbols)

IPC:F24F11/- F25B31/- F25B49/-

Documentation searched other than minimum documentation to the extent that such documents are included in the fields searched

Electronic data base consulted during the international search (name of data base and, where practicable, search terms used)

CNTXT, CNABS, ENTXT, ENTXTC, DWPI, WPABS, WPABSC, PATENTICS, 中国期刊网全文数据库, CJFD: 格力, 余凯, 傅英胜, 张辉, 薛寒冬, 倪毅, 杨力, 多联, 一拖多, 回油, 压缩机, 频率, 内机, 阶段, 时间, 分段, 阀, 开度, 噪音, 噪声; multi-connected, multiple, multi-split, oil return, stage?, compressor, frequency, indoor unit, time?, valve?, open+ degree, noise

**C.      DOCUMENTS CONSIDERED TO BE RELEVANT**

| Category* | Citation of document, with indication, where appropriate, of the relevant passages | Relevant to claim No. |
|---|---|---|
| PX | CN 115654645 A (ZHUHAI GREE ELECTRIC APPLIANCES INC.) 31 January 2023 (2023-01-31)<br>      description, paragraphs [0037]-[0091], and figures 2-7 | 1-15 |
| A | CN 110296547 A (NINGBO AUX ELECTRIC CO., LTD.) 01 October 2019 (2019-10-01)<br>      description, paragraphs [0084]-[0167], and figures 1-11 | 1-15 |
| A | CN 107940811 A (GUANGDONG MIDEA REFRIGERATION EQUIPMENT CO., LTD.) 20 April 2018 (2018-04-20)<br>      entire document | 1-15 |
| A | CN 108613434 A (ZHUHAI GREE ELECTRIC APPLIANCES INC.) 02 October 2018 (2018-10-02)<br>      entire document | 1-15 |
| A | CN 111023272 A (NINGBO AUX ELECTRIC CO., LTD.) 17 April 2020 (2020-04-17)<br>      entire document | 1-15 |

☑ Further documents are listed in the continuation of Box C.          ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **21 October 2023** | **26 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/110549** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 111059797 A (GZ DOTELS ELECTRICAL APPLIANCES CO., LTD.) 24 April 2020 (2020-04-24)<br>        entire document | 1-15 |
| A | CN 111271901 A (NINGBO AUX ELECTRIC CO., LTD.) 12 June 2020 (2020-06-12)<br>        entire document | 1-15 |
| A | JP 2004116805 A (FUJITSU GENERAL LIMITED) 15 April 2004 (2004-04-15)<br>        entire document | 1-15 |

Form PCT/ISA/210 (second sheet) (July 2022)

**INTERNATIONAL SEARCH REPORT**
Information on patent family members

International application No.

**PCT/CN2023/110549**

| Patent document cited in search report | | | Publication date (day/month/year) | Patent family member(s) | | | Publication date (day/month/year) |
|---|---|---|---|---|---|---|---|
| CN | 115654645 | A | 31 January 2023 | None | | | |
| CN | 110296547 | A | 01 October 2019 | CN | 110296547 | B | 21 April 2020 |
| CN | 107940811 | A | 20 April 2018 | None | | | |
| CN | 108613434 | A | 02 October 2018 | None | | | |
| CN | 111023272 | A | 17 April 2020 | None | | | |
| CN | 111059797 | A | 24 April 2020 | None | | | |
| CN | 111271901 | A | 12 June 2020 | CN | 111271901 | B | 14 September 2021 |
| JP | 2004116805 | A | 15 April 2004 | JP | 4039193 | B2 | 30 January 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211274297